# EUROPÄISCHE PATENTSCHRIFT

(11) **EP 3 075 242 B1**
(45) Veröffentlichungstag und Bekanntmachung des Hinweises auf die Patenterteilung: **18.04.2018**
(21) Anmeldenummer: 16159800.8
(22) Anmeldetag: 11.03.2016
(51) Int. Cl.: A01K 59/04

(54) **HONIGSCHLEUDER ZUR VERRINGERUNG DES WASSERSGEHALTS IM HONIG**
HONEY SPINNER FOR REDUCING THE WATER CONTENT IN HONEY
EXTRACTEUR DE MIEL DESTINE A REDUIRE LA TENEUR EN EAU DANS LE MIEL

(30) Priorität: 18.03.2015 SK 332015
(43) Veröffentlichungstag der Anmeldung: 05.10.2016
(73) Patentinhaber: Mika, Stanislav, 97401 Banska Bystrica (SK)
(72) Erfinder: Mika, Stanislav, 97401 Banska Bystrica (SK)
(74) Vertreter: Jeck, Anton

(56) Entgegenhaltungen:
- DE-A1-102005 014 562
- FR-A1- 2 668 037
- FR-A1- 2 948 259
- US-A- 2 161 113
- US-A- 4 472 450

## Beschreibung

Die vorliegende Erfindung betrifft das Gebiet der Erweiterung der bisherigen Funktion der Honigschleuder, die bislang nur monofunktionell zum Honigschleudern benutzt wurde, und der Erweiterung der Funktion zur Verringerung des Wassersgehalts im Honig, also zum Honigeindicken, vor allem schon bei dem Prozess des Honigschleuderns von Honigwaben, betrifft aber auch die Verringerung des Wassers schon im geschleuderten Honig im Zusammenhang mit der Honigreinigung. Dokument DE-A-102005014562 offenbart eine Honigschleuder. Zur Honiggewinnung von Honigwaben wird eine Honigschleuder benutzt, die die Schleuderkraft nutzt, die bei der Drehung der Honigwaben in der Honigschleuder entsteht. Zurzeit werden die Honigschleudern nur als monofunktionelles Gerät zur Honiggewinnung von Honigwaben benutzt. Oft enthält der vom Schleudern gewonnene Honig einen höheren Anteil an Wasser, mehr als es optimal ist oder sogar mehr als es von den Qualitätskriterien bestimmt ist. In einem solchen Fall wird eine Wasserreduktion im nächsten Arbeitsschritt angeordnet, und zwar geschieht dies in einer kostspieligen und technisch komplizierten Anlage, die zum wirkungsvollen Funktionieren eine relativ größere Menge an Honig und auch eine eigene Antriebseinheit (Motor) benötigt. Die Erfindung löst diese Aufgabe mit den Merkmalen des Anspruchs 1. Die obigen Nachteile werden im Wesentlichen durch die Erfindung einer Honigschleuder zur Verringerung des Wassers im Honig beseitigt. Das Prinzip der Erfindung liegt darin, dass es in der Schleudertrommel, also beim Honigschleudern der Honigwaben, schon zur Wasserreduktion im Honig kommt. Dieser Prozess der Honigverdickung betrifft gleichzeitig auch den beim Schleudern gewonnen Honig. Die ganze Vorrichtung kann von nur einem Motor der Honigschleuder angetrieben werden. Zum störungsfreien Betrieb der Anlage wird beim Prozess der Verringerung des Wassers im Honig auch die Honigreinigung eingeschlossen. Diese findet beim Durchgang des gewonnen Honigs durch Siebe statt, bei dem vor allem die Bienenwachstrümmer aufgefangen werden, die während des Honigschleuderns in den Honig gelangen. Die Kombination dreier verschiedener technologischer Prozesse, d. h. der Honiggewinnung, der Verringerung des Wassergehalts im Honig und der Honigreinigung mittels Sieben, im Rahmen eines Arbeitsgangs in einer einzigen Anlage, zudem angetrieben von nur einem Motor der Honigschleuder stellt eine erhebliche Einsparung an Zeit, Energie und Arbeitsaufwand bei der Gewinnung von hochwertigem Honig dar. Darüber hinaus erlaubt die Vorrichtung die Angliederung eines Tisches zum Abdeckeln der Honigwaben. Die Verwendung der Vorrichtung ist nicht auf eine minimale notwendige Menge an Honig limitiert, die für die Technologie zur Verringerung des Wassergehalts im Honig gebraucht wird. Das heißt, dass diese Vorrichtung auch für die Kleinimker von Nutzen ist, die eine kleinere Menge Honig produzieren. In solchen Fällen wird die erforderliche Kapazität meistens mittels der Größe und Art der verwendeten Honigschleuder bestimmt, was die vorgeschlagene technische Lösung ermöglicht. Die eigentliche Bedeutung der Erfindung hebt die Tatsache hervor, dass die Reduzierung des Wassergehalts im Honig bereits im Prozess der Honiggewinnung stattfindet, wenn der Honig durch die Zentrifugalkraft in Form von Tröpfchen aus den Waben an die Innenseite der Honigschleudertrommel gelangt, wobei er dann von der Innerseite der Trommel in einer dünner Schicht nach unten fließt. Das heißt, dass die Honigoberfläche der Tröpfchen und die dünne Honigschicht, die in Kontakt mit der Luft ist, an diesem Punkt am größten sind und sich bei keinem anderen Behandlungsverfahren von Honig wiederholen. Dies macht die Verringerung des Wassergehalts im Honig bereits im Prozess des Schleuderns am effektivsten.

Die Vorrichtung ergibt auch zusätzliche Vorteile für den Prozess der Honiggewinnung an sich. Die herkömmlich betriebene unabhängige Honigschleuder schwingt oft und ist wegen einer großen Rotation des Schleuderkorbs und der häufig exzentrischen Menge von Honig in den einzelnen geschleuderten Waben instabil. Bei der Vorrichtung gemäß der Erfindung stabilisiert das Gewicht des Honigs im Sammelbehälter die dynamischen Verhaltensweisen des Schleuderns. Die benutzte erwärmte Luft zur Verringerung des Wassers im Honig ist teilweise hilfreich, auch beim einzelnen Prozess des Honigschleuderns, da der ausgekühlte Honig schwieriger geschleudert wird und es dabei zu einer geringeren Entleerung der geschleuderten Honigwaben kommt.

Es ist nicht unbedingt notwendig, alle technologischen Prozesse gleichzeitig anzuwenden. Das heißt, dass es möglich ist, nur das Honigschleudern mit der möglichen Reinigung von Honig durchzuführen, und zwar ohne das Reduzieren des Wassers im Honig, oder es ist möglich, das Wasser im schon geschleuderten Honig einzeln zu reduzieren usw.

Die Vorrichtung gemäß der Erfindung ist so entworfen, dass die bisher üblichen Honigschleudern, egal ob radiale, tangentiale oder halbtangentiale, reflexive Honigschleudern mit mindestens einer Luftzufuhr vorgesehen sind, wobei die Luft zur Erhöhung der Effizienz von mindestens einem Luftheizkörper erwärmt werden kann.

Dabei wird die zugeführte Luft in der Honigschleudertrommel mit Wasser aufgefüllt, das sich in dem von Bienenwaben geschleuderten Honig oder dem schon gewonnen Honig befindet. Wenn der dünne, extrahierte Honig sich bereits im Honigbehälter befindet, ist es möglich, ihn einfach durch die Trommel in die Honigschleuder oder durch den Honigauslauf vom Tisch zum Abdeckeln direkt in den Sammelbehälter zu gießen. Mit Hilfe einer Honigpumpe mit mindestens einem Rohr für den Honig kommt es wiederum zum Rückpumpen von Honig aus dem Honigbehälter in den Raum der Honigschleuder, wo er auf die Innenseite der Trommel gesprüht wird, um die strömende Luft mit Wasser aufzufüllen. Die Luft, die einen Teil des Wassers des Honigs enthält, wird außerhalb der Honigschleuder abgelassen oder in eine Kondensationseinheit injiziert, um das Wasser aus der Luft in Form von Kondensationswasser zu trennen. Dadurch wird eine Verringerung des Wassergehalts im Honig erreicht.

Der Motor der Honigschleuder mit einer Verlängerung der Honigschleuderachse dient auch zum Antrieb der Honigpumpe. Die Honigschleuderachse kann gleichzeitig als Rohr für den Honig genutzt werden. Die Betätigung der Honigpumpe erlaubt auch der Pumpenhaube, die Honigströmung zu regulieren, wobei die exzentrisch geformten Pumpenschaufeln zur Achse der Honigschaufel gedrückt werden. Die Schaufeln drehen sich bei der Drehveränderung der Honigpumpe selbständig in die richtige Betriebsstellung, und zwar aufgrund des Widerstands des Honigs. Das Befestigen der Schaufeln in einen Winkel des möglichen Umkippens der Schaufel bei der Veränderung der Drehrichtung der Pumpe sichern Sperrbolzen, die eine freie Drehung der Schaufel auf der Achse nur in diesem Bereich ermöglichen.

Um die Leistung der Honigpumpe zu verbessern, kann das Rohr für den Honig von der Drehachse abgeneigt werden, d. h. in die Richtung der Honigschleuderachse. Der aus der Honigpumpe austretende Honig, der unter der Wirkung der Zentrifugalkraft auf der Schrägfläche oder im Rohr in Richtung der Zentrifugalkraft steht, wird noch mehr in die richtige Richtung angetrieben.

Um die exzentrischen Schaufeln des Eingangsgebläses anzutreiben, und zwar zur Achse der Schaufeln des Eingangsgebläses sowie der exzentrischen Schaufeln des Ausgangsgebläses zur Achse der Schaufeln des Ausgangsgebläses, wird auch der Motor der Honigschleuder eingesetzt. Bei einer Änderung der Drehrichtung des Korbs der Honigschleuder drehen sich die Schaufeln allein in die richtige Betriebsstellung, und zwar auf Grund des Luftwiderstands. Das Befestigen der Schaufeln in einem Winkel des möglichen Umkippens der Schaufel bei der Veränderung der Drehrichtung des Korbs der Honigschleuder sichern Sperrbolzen, die eine freie Drehung der Schaufel auf der Achse nur in diesem Bereich ermöglichen.

Insbesondere für das störungsfreie Rückpumpen des Honigs vom Honigsammelbehälter zurück in die Honigschleudertrommel ist der Honigsammelbehälter mit mindestens einem Honigsieb ausgestattet. Hier erfolgt eine Reinigung des Honigs. Verstopfte Siebe können auch während einer Betriebspause aufgrund einer größeren Anzahl von Sperrbolzen für die Siebe als es die Anzahl der Siebe in Betrieb ist, ausgetauscht werden. Der Austausch der Siebe wird durchgeführt, wenn die Honigschleuder auf Gelenke angehoben wird. Auf diese Weise wird die Trennung der Honigschleuder vom Honigsammelbehälter erreicht.

An den Honigsammelbehälter kann ein Tisch zum Abdeckeln angereiht werden, damit der Honig, der von den abgedeckelten Honigwaben tropft, direkt durch einen Honigauslauf des Tisches zum Abdeckeln in den Honigsammelbehälter gelangt. So kommt es zu einer direkten Einfügung der abzudeckelnden Honigwaben in die Honigschleuder.

In dem Honigsammelbehälter kann zwischen der Honigmenge, die von der Honigschleuder kommt, und der Honigmenge, die sich hinter dem Sieb befindet, mindestens ein Überlaufrohr für den Honig angeordnet sein. So wird bei der Verstopfung der Siebe verhindert, dass die obere Menge des am stärksten vom Honigwachs verschmutzten Honigs zu der Honigpumpe gelangt. Im Falle einer Verstopfung der Siebe und damit der daraus entstehenden Anhebung des Honigniveaus fließt der Honig durch das Überlaufrohr weg. Dieser Honig fließt von der Eintrittsöffnung des Überlaufrohrs von der unteren Honigschicht, in der sich der sauberste Honig befindet. Dadurch wird eine Absetzung des Honigniveaus auf das Niveau des Betriebsspiegels bei der Honigreinigung erreicht, wobei das Niveau von der Höhe der Tauchwand bestimmt wird.

In der Mitte des Korbs der Honigschleuder befindet sich ein Führungsrohr für die Zufuhrluft. Diese bestimmt den Luftstrom und verhindert die Vermischung der erwärmten Zuluft mit der Luft, die in die Kondensatoreinheit fließt. In dem Teil des Honigsammelbehälters befinden sich zur Erhöhung der Effizienz der Vorrichtung Streuschaufeln. Bei deren Bewegung strömt der Luftstrom mehr um die Honigmenge im Honigsammelbehälter, wodurch die Effizienz der Verringerung des Wassergehalts im Honig erhöht wird.

### Ausführunctsbeispiele

Die Erfindung wird nun anhand von Ausführungsbeispielen, die in den beigefügten Zeichnungen dargestellt sind, näher erläutert. Es zeigen:
- Fig. 1: einen Vertikalschnitt durch die Vorrichtung, der den Luftstrom bei der Verringerung des Wassergehalts im Honig zeigt,
- Fig. 2: einen Horizontalschnitt durch die Vorrichtung, der vor allem das Reinigen des geschleuderten Honigs im Honigsammelbehälter in Bezug auf die Honigpumpe zeigt,
- Fig. 3: ein Detaildiagramm des Betriebs der Honigpumpe,
- Fig. 4: ein Detaildiagramm des Betriebs von Schaufeln des Eingangsgebläses,
- Fig. 5: ein Detaildiagramm des Betriebs von Schaufeln des Ausgangsgebläses,
- Fig. 6: ein Detaildiagramm des Betriebs eines Überlaufrohrs für den Honig in einem senkrechten Schnitt und
- Fig. 7: ein Detaildiagramm des Betriebs des Überlaufrohrs für den Honig mit Sperrbolzen für die Siebe in einem waagerechten Schnitt.

### Beschreibung der Ausführungsbeispiele

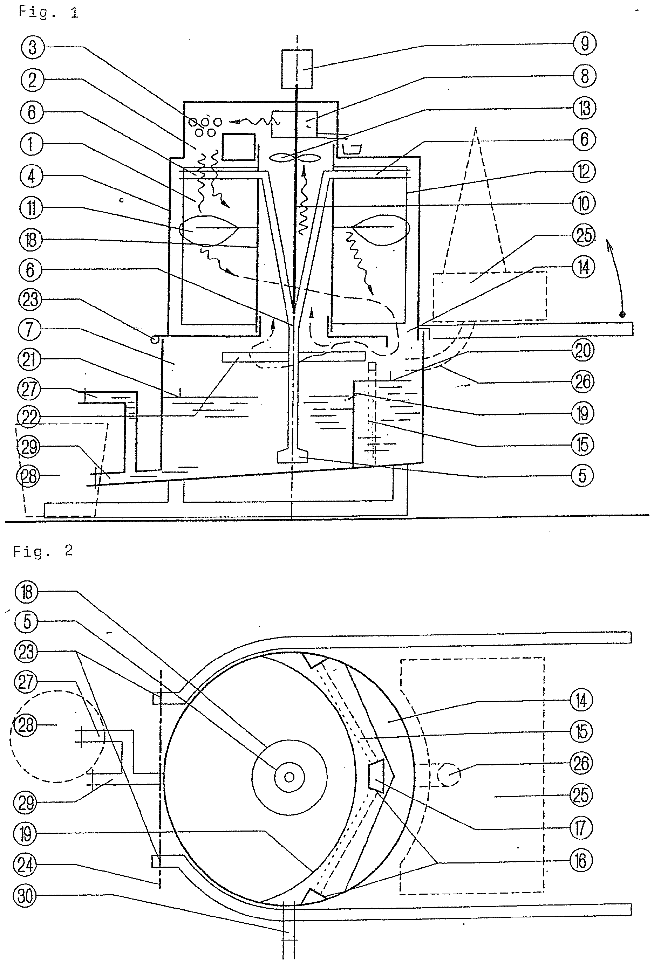

Die Honigschleuder nach den Figuren 1 und 2 besteht aus einer klassischen bisher genutzten Rückhonigschleuder 1. Im Gegensatz zum üblichen Honigschleudern, bei dem die abgedeckelten Honigwaben in eine Trommel 4 der Honigschleuder gelegt werden, ist die Vorrichtung gemäß der Erfindung noch mit einer Luftzufuhr 2 versehen. Die Luft wird dabei zur Erhöhung der Effizienz von mindestens einem Luftheizkörper 3 erwärmt. Dabei wird die zugeführte Luft in der Honigschleudertrommel 4 vom Wasser aufgefüllt, das sich in dem von Bienenwaben geschleuderten Honig befindet. Die Luft wird auch vom Wasser in solchen Honig aufgefüllt, der nach dem Schleudern in einen Honigsammelbehälter 7 geflossen ist, aber mittels einer Honigpumpe 5 eines Rohrs 6 für den Honig vom Honigsammelbehälter 7 in den Raum der Honigschleuder 1 fließt, wo er auf die Innenseite der Trommel 4 gesprüht wird. Die Luft, die einen Teil des Honigwassers enthält, wird in eine Kondensationseinheit 8 injiziert, um das Wasser aus der Luft in Form von Kondensationswasser zu trennen.

Dadurch wird eine Verringerung des Wassergehalts im Honig erreicht.

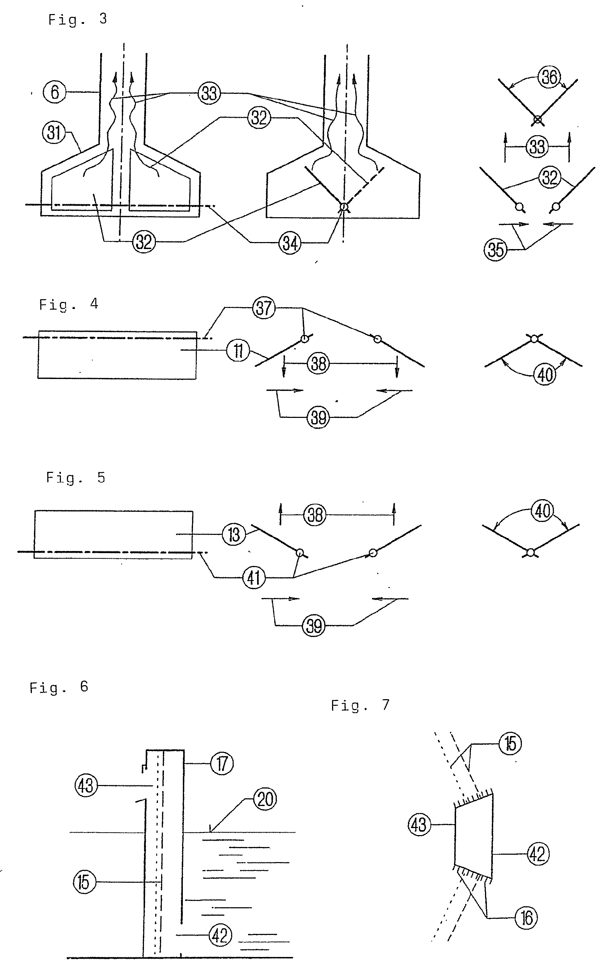

Ein Motor 12 der Honigschleuder mit einer verlängerten Honigschleuderachse 10, die gleichzeitig als Rohr 6 für den Honig genutzt wird, dient auch zum Antrieb der Honigpumpe 5. Detailliert zeigt dies Fig. 3, in der die Honigpumpe eine Betätigung einer Pumpenhaube 31 gewährleistet. In der Pumpenhaube 31 wird die Honigströmung mittels der exzentrisch geformten Pumpenschaufeln 32 zur Achse 34 der Honigschaufel reguliert, die bei der Drehänderung der Honigpumpe 5 selbständig aufgrund des Widerstands des Honigs in die richtige Betriebsstellung gelangen. Das Befestigen der Schaufeln in einem Winkel 36 des möglichen Umkippens der Schaufel bei der Änderung der Drehrichtung der Pumpe sichern Sperrbolzen.

Um die Leistung der Honigpumpe 5 zu verbessern, ist ein Rohr 6 für den Honig von der Drehachse abgeneigt, d. h. in der Richtung der Honigschleuderachse. Der von der Honigpumpe 5 austretende Honig, der unter der Wirkung der Zentrifugalkraft auf der Schrägfläche oder im Rohr in Richtung der Zentrifugalkraft steht, wird dabei noch mehr in die richtige Richtung angetrieben.

Um die Schaufeln des Eingangsgebläses 11 der exzentrische Form anzutreiben, und zwar zur Achse der Schaufeln eines Eingangsgebläses 37 sowie der Schaufeln eines Ausgangsgebläses 13 der exzentrischen Form zur Achse der Schaufeln eines Ausgangsgebläses 41, wird ein Motor 9 der Honigschleuder eingesetzt. Detailliert zeigen dies die Figuren 4 und 5. Bei einer Änderung der Drehrichtung eines Korbs 12 der Honigschleuder drehen sich die Schaufeln allein in die richtige Betriebsstellung, und zwar auf Grund des Luftwiderstands. Das Befestigen der Schaufeln in einem Winkel 40 des möglichen Umkippens der Schaufel bei der Änderung der Drehrichtung des Korbs der Honigschleuder sichern Sperrbolzen.

Insbesondere für das störungsfreie Rückpumpen des Honigs vom Honigsammelbehälter 7 zurück in die Honigschleudertrommel 4 ist der Honigsammelbehälter 7 mit Honigsieben 15 ausgestattet. Verstopfte Siebe können auch während der Betriebspause auf Grund der größeren Anzahl von Sperrbolzen 16 für die Siebe ausgetauscht werden, als es die Anzahl der in Betrieb befindlichen Siebe ist. Der Austausch der Siebe wird durchgeführt, wenn die Honigschleuder auf den Gelenken angehoben wird, und in dieser Weise wird eine Trennung der Honigschleuder 1 vom Honigsammelbehälter 7 erreicht.

An den Honigsammelbehälter 7 ist ein Tisch 25 zum Abdeckeln angeschlossen, damit der Honig, der von den abgedeckelten Honigwaben tropft, direkt durch den Honigauslauf 26 des Tisches zum Abdeckeln in den Honigsammelbehälter 7 gelangt. Im Honigsammelbehälter 7 befindet sich zwischen der Honigmenge, die von der Honigschleuder gewonnen wird, und der Honigmenge, die sich hinter dem Sieb befindet, ein Überlaufrohr 17 für den Honig. Detailliert zeigen das Funktionieren des Überlaufrohrs die Figuren 6 und 7. Im Falle einer Verstopfung der Siebe verhindert das Überlaufrohr, dass die obere Menge des am stärksten vom Honigwachs verschmutzten Honigs zur Honigpumpe 5 gelangt. Durch das Überlaufrohr 43 fließt der Honig von der Eintrittsöffnung des Überlaufrohrs 42 von der unteren Honigschicht, wodurch das Niveau des Betriebsspiegels 20 bei der Honigreinigung erreicht wird und wobei das Niveau von der Höhe der Tauchwand 19 bestimmt wird.

In der Mitte des Korbs 12 der Honigschleuder befindet sich ein Führungsrohr 18 für die Zufuhrluft. Diese bestimmt den Luftstrom vom Luftheizkörper 3 durch die Luftzufuhr 2 in dem Raum der Honigschleudertrommel 4 in den Raum des Honigsammelbehälters 7, in der sich die Streuschaufeln 22 befinden, bei deren Bewegung der Luftstrom mehr um die Honigmenge strömt. Erst dann fließt die feuchte Luft durch das Führungsrohr 18 auf die Luft in die Kondensationseinheit 8, wodurch der Vorgang der Verringerung des Wassergehalts im Honig erfüllt wird.

Die Honigschleuder zur Verringerung des Wassergehalts im Honig ist sowohl für Kleinimker als auch Großimker bestimmt. Der Vorteil dieser Vorrichtung liegt darin, dass sie alle drei einzelne technologische Vorgangsweisen verbindet, nämlich das Honigschleudern, die Honigreinigung mittels Sieben und die Verringerung des Wassergehalts im Honig. Vor allem für die Kleinimker ist es vorteilhaft, dass in einem einfachen Arbeitsprozess alles ausgeführt werden kann, um ein hochwertiges Imkerprodukt zu erreichen.

## Patentansprüche

1. Honigschleuder zur Verringerung des Wassergehalts im Honig, die aus einer bisher üblichen Honigschleuder (1), egal ob einer radialen, tangentialen oder halbtangentialen Rückhonigschleuder, besteht, die einen Motor (9) der Honigschleuder, eine Honigschleudertrommel (4), einen Korb (12) der Honigschleuder und eine Honigschleuderachse (10) aufweist,
**dadurch gekennzeichnet,**
**dass** sie mit mindestens einer Luftzufuhr (2), einem Luftheizkörper (3), einer Honigpumpe (5) mit einem Rohr (6) für den Honig zum Rückpumpen des Honigs von einem Honigsammelbehälter (7) in den Raum der Honigschleuder zum Streuen des Honigs auf die Innenseite der Honigschleudertrommel (4), mit Schaufeln (11) eines Eingangsgebläses (13), Schaufeln (11) eines Ausgangsgebläses und mit einer Kondensationseinheit (8) zur Wassertrennung von der Luft versehen ist.

2. Honigschleuder nach Anspruch 1,
**dadurch gekennzeichnet,**
**dass** die Honigpumpe eine Pumpenhaube (31), exzentrisch zur Achse der Honigschaufeln (34) geformte Pumpenschaufeln (32), befestigt in einem Winkel (36) des möglichen Umkippens der Schaufel bei der Änderung der Drehrichtung der Pumpe, umfasst.

3. Honigschleuder nach den Ansprüchen 1 und 2,
**dadurch gekennzeichnet,**
**dass** das Rohr (6) für den Honig eine schiefe Form aufweist oder senkrecht von der Drehachse abgeneigt ist

4. Honigschleuder nach Anspruch 1,
**dadurch gekennzeichnet,**
**dass** die Schaufeln (11) des Eingangsgebläses eine exzentrische Form aufweisen, und zwar zur Achse (37) der Schaufeln des Eingangsgebläses sowie der Schaufeln (13) des Ausgangsgebläses der exzentrischen Form zur Achse (41) der Schaufeln des Ausgangsgebläses, und durch die Befestigung der Schaufeln in einem Winkel (40) des möglichen Umkippens der Schaufeln bei einer Änderung der Drehrichtung gesichert sind.

5. Honigschleuder nach Anspruch 1,
**dadurch gekennzeichnet,**
**dass** der Honigsammelbehälter (7) mit mindestens einem Honigsieb (13) und einer größeren Anzahl von Sperrbolzen (16) für die Siebe, als es die Anzahl der in Betrieb befindlichen Siebe sind, ausgestattet ist.

6. Honigschleuder nach Anspruch 1,
**dadurch gekennzeichnet,**
**dass** an den Honigsammelbehälter (7) ein Tisch (25) zum Abdeckeln angeschlossen ist.

7. Honigschleuder nach Anspruch 1,
**dadurch gekennzeichnet,**
**dass** im Honigsammelbehälter (7) zwischen der Honigmenge, die von der Honigschleuder gewonnen wird, und der Honigmenge, die sich hinter dem Sieb befindet, ein Überlaufrohr (17) für den Honig angeordnet ist, wobei das Rohr mit einer Eintrittsöffnung des Überlaufrohrs (42) und einem Überlaufrohr (43), das von der Höhe der Tauchwand (19) bestimmt wird, versehen ist.

8. Honigschleuder nach Anspruch 1,
**dadurch gekennzeichnet,**
**dass** sich in der Mitte des Korbs (12) der Honigschleuder ein Führungsrohr (18) für die Zufuhrluft befindet, die den Luftstrom bestimmt und die Vermischung der erwärmten Zuluft mit der feuchten Luft verhindert, die in die Kondensatoreinheit (8) gelangt, wobei sich in einem Teil des Honigsammelbehälters (7) Streuschaufeln (22) befinden.

## Claims

1. A honey centrifuge for reducing the water content of honey, consisting of a honey centrifuge (1) of the usual type, whether a radial, tangential or semi-tangential reverse honey centrifuge, with a motor (9) for the honey centrifuge, a honey centrifuge drum (4), a basket (12) to the honey centrifuge, and a honey centrifuge axle (10), **characterised by** a honey centrifuge that has at least one air supply (2), an air heater (3), a honey pump (5) with a tube (6) to recirculate the honey from a honey sump (7) back into the honey centrifuge for scattering the honey on the inside of the honey centrifuge drum (4), an inlet fan (13) with blades (11), an outlet fan with blades (11), and a condensation unit (8) for separating water from the air.

2. The honey centrifuge according to Claim 1, **characterised in that** the honey pump comprises a pump hood (31), [and] pump blades (32) formed eccentrically to the axle of the honey blades (34), fixed at an angle (36) which includes the possibility of tilting the blades when the direction of rotation of the pump is changed.

3. The honey centrifuge according to Claims 1 and 2, **characterised in that** the tube (6) for the honey has an oblique shape or is inclined perpendicular to the axis of rotation.

4. The honey centrifuge according to Claim 1, **characterised in that** the blades (11) of the inlet fan have an eccentric shape, namely with respect to the axle (37) of the blades of the inlet fan, just as the blades (13) of the outlet fan have an eccentric form with respect to the axle (41) of the outlet fan, and ensures, by the attachment of the blades at an angle (40), that the blades can be tilted when the direction of rotation is changed.

5. The honey centrifuge according to Claim 1, **characterised in that** the honey sump (7) is equipped with at least one honey sieve (13) and with a larger number of locking pins (16) for the sieves than the number of sieves in operation.

6. The honey centrifuge according to Claim 1, **characterised in that** there is a table (25) connected to the honey sump (7) for covering.

7. The honey centrifuge according to Claim 1, **characterised in that** in the honey sump (7), an overflow tube (17) is deployed between the honey obtained from the honey centrifuge, and the honey located behind the sieve, wherein the tube is furnished with an inlet opening (42), and with an overflow tube (43) which is determined by the height of the baffle (19).

8. The honey centrifuge according to Claim 1, **characterised in that** in the centre of the basket (12) of the honey centrifuge is a guide tube (18) for the supplied air, which determines the air flow and prevents mixing of the heated supply air with the moist air flowing into the condenser unit (8), with spreading vanes (22) located in a part of the honey sump (7).

## Revendications

1. Extracteur de miel destiné à réduire la teneur en eau dans le miel, comprenant un extracteur de miel (1) ordinaire, qu'il soit un extracteur de retour radial, tangentiel ou semi-tangentiel, qui comporte un moteur (9) de l'extracteur de miel, un tambour (4) d'extracteur de miel, un panier (12) de l'extracteur de miel et un axe (10) d'extracteur de miel, **caractérisé en ce qu'**il est doté d'au moins une amenée d'air (2), d'un corps (3) de chauffage d'air, d'une pompe (5) à miel, d'un tuyau (6) pour le miel destiné à refouler le miel à partir du récipient collecteur (7) de miel dans la chambre de l'extracteur de miel pour répandre le miel sur la face intérieure du tambour (4) d'extracteur, des pales (11) d'un ventilateur d'entrée (13), des pales (11) d'un ventilateur de sortie et d'une unité de condensation (8) destinée à séparer l'eau de l'air.

2. Extracteur de miel selon la revendication 1, **caractérisé en ce que** la pompe à miel comprend un couvercle (31) de pompe, excentré par rapport aux pales (32) de pompe formées comme des pales (34) à miel, fixé selon un angle (36) du basculement possible des pales lors du changement de sens de rotation de la pompe.

3. Extracteur de miel selon les revendications 1 et 2, **caractérisé en ce que** le tuyau (6) pour le miel présente une forme inclinée ou est inclinée perpendiculairement par rapport à l'axe de rotation.

4. Extracteur de miel selon la revendication 1, **caractérisé en ce que** les pales (11) du ventilateur d'entrée présentent une forme excentrique et notamment par rapport à l'axe (37) des pales du ventilateur d'entrée et des pales (13) du ventilateur de sortie ayant une forme excentrique par rapport à l'axe (41) des pales du ventilateur de sortie, et sont fixées par la fixation des pales selon un angle (40) du basculement possible des pales lors d'un changement de sens de rotation.

5. Extracteur de miel selon la revendication 1, **caractérisé en ce que** le récipient collecteur (7) de miel est équipé d'au moins un tamis (13) à miel et d'un nombre supérieur de boulons de blocage (16) pour les tamis que le nombre des tamis en fonctionnement.

6. Extracteur de miel selon la revendication 1, **caractérisé en ce qu'**au récipient collecteur (7) de miel est reliée une table (25) destinée à désoperculer.

7. Extracteur de miel selon la revendication 1, **caractérisé en ce que** dans le récipient collecteur (7) de miel entre la quantité de miel qui est obtenue par l'extracteur de miel et la quantité de miel qui se situe sous le tamis, est disposé un tuyau de trop-plein (17) pour le miel, le tuyau étant doté d'un orifice d'entrée du tuyau de trop-plein (42) et d'un tuyau de trop-plein (43) qui est déterminé par la hauteur du pare-écume (19).

8. Extracteur de miel selon la revendication 1, **caractérisé en ce qu'**au centre du panier (12) de l'extracteur de miel se situe un tube de guidage (18) pour l'air amené qui détermine le flux d'air et empêche le mélange de l'air amené chauffé à l'air humide qui arrive dans l'unité de condensation (8), des pales d'épandage (22) se trouvant dans une partie du récipient collecteur (7) de miel.
